# EUROPÄISCHE PATENTSCHRIFT

(11) **EP 2 293 010 B1**
(45) Veröffentlichungstag und Bekanntmachung des Hinweises auf die Patenterteilung: **16.01.2013**
(21) Anmeldenummer: 10008905.1
(22) Anmeldetag: 27.08.2010
(51) Int. Cl.: G01B 11/04, B42C 9/02, B42C 11/00

(54) **Verfahren und Vorrichtung zur Lageerkennung von gefälzelten Buchblocks**
Method and device for determining the position of back-lined book blocks
Procédé et dispositif de reconnaissance de position de blocs de livre avec garniture

(30) Priorität: 02.09.2009 DE 102009039763
(43) Veröffentlichungstag der Anmeldung: 09.03.2011
(73) Patentinhaber: Kolbus GmbH & Co. KG, 32369 Rahden (DE)
(72) Erfinder: Schwettmann, Dietmar, 32369 Rahden (DE)

(56) Entgegenhaltungen:
- EP-A2- 0 838 664
- DE-A1- 3 805 062
- DE-A1- 10 015 485

## Beschreibung

Die Erfindung betrifft ein Verfahren sowie eine Vorrichtung zur Lageerkennung von gefälzelten Buchblocks gemäß dem Oberbegriff von Anspruch 1 bzw. Anspruch 6.

Bei der buchbinderischen Endfertigung werden in einer Buchstraße bzw. einer Bucheinhängemaschine Buchblocks in Buchdecken eingehangen. Für eine lagerichtige Zuführung der gefälzelten und dreiseitig beschnittenen Buchblocks wird beim vorgelagerten Fälzeln eine kopf- oder fußnahe Markierung mittels Faser- oder Kugelschreiber auf dem Fälzelstreifen aufgebracht. Die Markierung kann in der weiteren Verarbeitung der Buchblocks visuell oder durch lichtempfindliche Sensoren überprüft werden. Die Methode ist in der DE-OS 27 25 378 beschrieben.

Aus der DE 38 05 062 A1 ist ein Verfahren zur Lageerkennung von Buchblocks bekannt, bei dem mehrere optische oder magnetische Markierungen mit definierten untereinander unterschiedlichen Abständen auf dem Buchblockrücken aufgebracht und mittels optoelektronischer oder induktiver Impulsgeber abgetastet werden. Beim Vorbeitransport des Buchblocks an einer Photozelle als Aufnehmer remittierter Lichtstrahlen wird zu bestimmten Förderzeitpunkten das Vorhandensein der Markierungen abgefragt.

Aus der EP 0 838 664 A2 ist ein Verfahren und eine Vorrichtung nach den Oberbegriffen der Ansprüche 1 und 6 zur Lagekontrolle bekannt, bei dem eine einzelne quer zum Blockrücken über den Verstärkunasstreifen verlaufende Markierung von zwei in Förderrichtung der Buchblocks hintereinander angeordneten Photozellen abgetastet wird. Der Abstand der Markierung zur vorlaufende Blockkante und der Abstand der Photozellen zueinander sind derart aufeinander abgestimmt, dass aus den analogen Signalen der Photozellen digitale Differenzsignalmuster gebildet werden, die die Bestimmung der Position der Markierung auf dem Verstärkungsstreifen bzw. dem Buchblock im Sinne der Lagekontrolle ermöglichen.

Das Aufbringen von Markierungen auf den aus Krepppapier oder Scharnierstoff bestehenden Fälzelstreifen ist nicht nur mit entsprechendem Aufwand verbunden sondern auch problematisch, da dessen raue Oberfläche das Aufbringen einer gleichmäßig durchlaufenden Markierung behindert. Bei Tinte abgebenden Schreibeinrichtungen werden in Abhängigkeit von der Verarbeitungsgeschwindigkeit Markierungen in stark unterschiedlicher Intensität erzeugt. Bei saugfähigen Krepppapieren kann es dabei einerseits zu einer unzulässigen, durch das Vorsatzpapier durchscheinenden Durchtränkung des Fälzelstreifens kommen, andererseits ist bei hoher Verarbeitungsgeschwindigkeit die Intensität der Markierung für eine zuverlässige Abtastung durch einen Sensor zu schwach.

Der Erfindung liegt die Aufgabe zugrunde, ein Verfahren und eine Vorrichtung zur Lageerkennung von gefälzelten Buchblocks zu schaffen, das bzw. die eine Markierung des Fälzelstreifens nicht mehr erfordert und trotzdem eine zuverlässige Überprüfung der Lage visuell und/oder durch Sensoren ermöglicht.

Diese Aufgabe wird erfindungsgemäß bei dem Verfahren dadurch gelöst, dass der Verstärkungstreifen asymmetrisch zur Blockrückenmitte angebracht wird und dass eine Kante des Fälzelstreifens mit einem Sensor abgetastet wird. Bei der Vorrichtung ist vorgesehen, dass der Sensor ein licht- bzw. strahlungsempfindlicher und eine wenigstens eindimensionale Anordnung aus Detektorelementen aufweisender Sensor ist, und dass der Sensor zur Abtastung einer Kante des Verstärkungsreifens im Wesentlichen quer zu dieser Kante gegen den Buchblock gerichtet ist und zwar derart, dass zusätzlich zur Kante eine Blockkante abgetastet wird, wobei die Buchblocks einen asymmetrisch zur Blockrückenmitte angebrachten Verstärkungstreifen aufweisen.

Durch die asymmetrische Anbringung des Fälzelstreifens kann die Lage bzw. Orientierung des Buchblocks eindeutig festgestellt werden. Voraussetzung ist lediglich eine innerbetriebliche bzw. zwischen den Verarbeitungsbetrieben abzustimmende Vereinbarung über die Ausprägung der Asymmetrie und deren Zuordnung zu einer bestimmten Lage. Die Asymmetrie zur Blockrückenmitte kann in Rückenlängsrichtung und/oder quer dazu vorliegen. Sie ist visuell und durch Sensoren erkennbar, sodass der Produktionsablauf nicht nur automatisiert sondern auch ständig visuell überprüft werden kann, ohne dass dafür ein Buchblock der Zuführung zur Buchstraße entnommen werden muss. Es muss keine farbliche Markierung mehr auf den Fälzelstreifen aufgebracht werden, wodurch die damit einhergehenden, oben aufgezeigten Probleme und Nachteile in Fortfall gelangen. Die asymmetrische Anbringung ist ohne zusätzlichen Aufwand realisierbar und kann mit den bekannten Fälzeleinrichtungen erfolgen.

Es können mit dem Verfahren und der Vorrichtung drei Fälle unterschieden werden. Wird keine Kante des Fälzelstreifens erkannt, so ist der Buchblock derart verdreht angelegt, dass sich anstelle des Rückens der Vorderschnitt befindet. Wird eine Kante vom Sensor erfasst aber ihre relative Position am Buchblock stimmt nicht, so ist der Buchblock mit Kopf und Fuß vertauschter Lage angelegt worden. Eine korrekte Verarbeitungsposition des Buchblocks wird verifiziert, wenn eine Kante des Fälzelstreifens erkannt und auch ihre relative Position am Buchblock stimmt. Die relative Position kann mit dem quer zu einer Kante des Fälzelstreifens gegen den Buchblock gerichteten Sensor sowohl im Stillstand als auch in der Förderbewegung ermittelt werden. Der Sensor erfasst Helligkeitsunterschiede und gibt diese zur Auswertung an die Steuerung aus. Denkbar ist aber auch die Ausgabe eines Höhenprofils, denn der Fälzelstreifen steht aufgrund seiner Dicke von ca. 0,2 ... 0,4 mm gegenüber dem Buchblock vor.

Eine bevorzugte Weiterausgestaltung des Verfahrens sieht vor, dass der Fälzelstreifen mit unterschiedlichen, seitlichen Übergriffbreiten am Rücken angebracht wird und eine Längskante des Fälzelstreifens abgetastet wird. Der Blockrücken ist vollflächig hinterklebt, lediglich die seitlichen Übergriffbreiten sind verschieden. Diese Art der asymmetrischen Anbringung kann mit den bekannten Fälzeleinrichtungen besonders einfach ausgeführt werden. Besagte Längskante liegt in einer Flachseite des Buchblocks. Sowohl bei flach aufliegendem als auch bei stehendem Transport des Buchblocks kann ein Sensor auf die Flachseite gerichtet werden.

Vorzugsweise beträgt die Differenz aus den unterschiedlichen, seitlichen Übergriffbreiten 3 bis 15 mm. Die seitlichen Übergriffe können damit in den üblichen Größenordnungen erfolgen. Bereits eine Differenz von 3 mm kann visuell unterschieden werden. Die sensorische Abtastung kann mit noch geringeren Differenzen erfolgen, sofern die Übergriffbreiten in entsprechend engen Toleranzen vorliegen.

Lichtempfindliche Sensoren können die Fälzelstreifenkante noch sicherer abtasten, wenn das Fälzelstreifenmaterial eine vom Buchblock unterschiedliche Farbe und/oder Helligkeitsintensität aufweist. Durch die zusätzliche Abtastung einer Blockkante kann nicht nur das Vorhandensein der Fälzelstreifenkante sondern auch die relative Position am Buchblock von dem Sensor festgestellt werden.

In vorteilhafter Weiterausgestaltung der Vorrichtung weist der Sensor eine zweidimensionale Anordnung aus Detektorelementen auf. Mit diesen sogenannten Flächensensoren kann auch bei an sich gleichen Farb- und/oder Helligkeitswerten von Buchblock und Fälzelstreifen eine davon abweichende Helligkeit entlang der Fälzelkante sicher erkannt werden. Die Fälzelkante ist noch besser durch den Sensor erkennbar, wenn der Sensor in einem Neigungswinkel schräg auf den Buchblock gerichtet ist. Die Abtastung einer Blockkante zusätzlich zur Fälzelkante ermöglicht eine einfache Bestimmung der relativen Lage der Fälzelkante am Buchblock.

Bei mit unterschiedlichen, seitlichen Übergriffbreiten gefälzelten Buchblocks kann eine Längskante zur Lageerkennung abgetastet werden, indem der Sensor quer zum Rücken wirkend gegen eine Flachseite des Buchblocks gerichtet ist. Eine sichere Lageerkennung ist möglich, wenn die Differenz aus den unterschiedlichen, seitlichen Übergriffbreiten 3 bis 15 mm beträgt.

Vorteilhaft ist, wenn die Position einer Fälzelkante nicht nur erkannt sondern bezüglich ihrer Lage gemessen wird. In bevorzugter Weiterausgestaltung ist vorgesehen, dass die Breite von einem seitlichen Übergriff des Fälzelstreifens am Buchblock gemessen wird.

Der gemessen Wert des Sensors kann mit einem gespeicherten Referenzwert verglichen werden, welcher beispielsweise durch einen Teach-In-Vorgang mit einem ersten, in korrekter Verarbeitungsposition angelegten Buchblock festlegbar ist.

Anstelle eines einzigen Sensors können auch zwei Sensoren auf gegenüberliegenden Flachseiten des Buchblocks gerichtet sein. Die gemessenen Werte können zur Lageerkennung direkt miteinander verglichen werden. Ein Vergleich mit einem gespeicherten Referenzwert ist dann nicht erforderlich.

Die Merkmale der vorliegenden Erfindung werden in der folgenden Beschreibung bevorzugter Ausführungsformen anhand der beigefügten, nachstehend aufgeführten Zeichnungen erläutert. Es zeigen
- **Fig. 1**: einen flach aufliegenden, asymmetrisch mit unterschiedlichen Übergriffbreiten gefälzelten Buchblock und einen Flächensensor zur Lageerkennung;
- **Fig. 2**: den Buchblock auf dem Vorderschnitt stehend und zwei auf gegenüberliegende Flachseiten des Buchblocks gerichtete Flächensensoren zur Lageerkennung;
- **Fig. 3**: einen in Rückenlängsrichtung asymmetrisch gefälzelten Buchblock; und
- **Fig. 4**: ein von dem Flächensensor nach Abtastung ausgegebenes Bild.

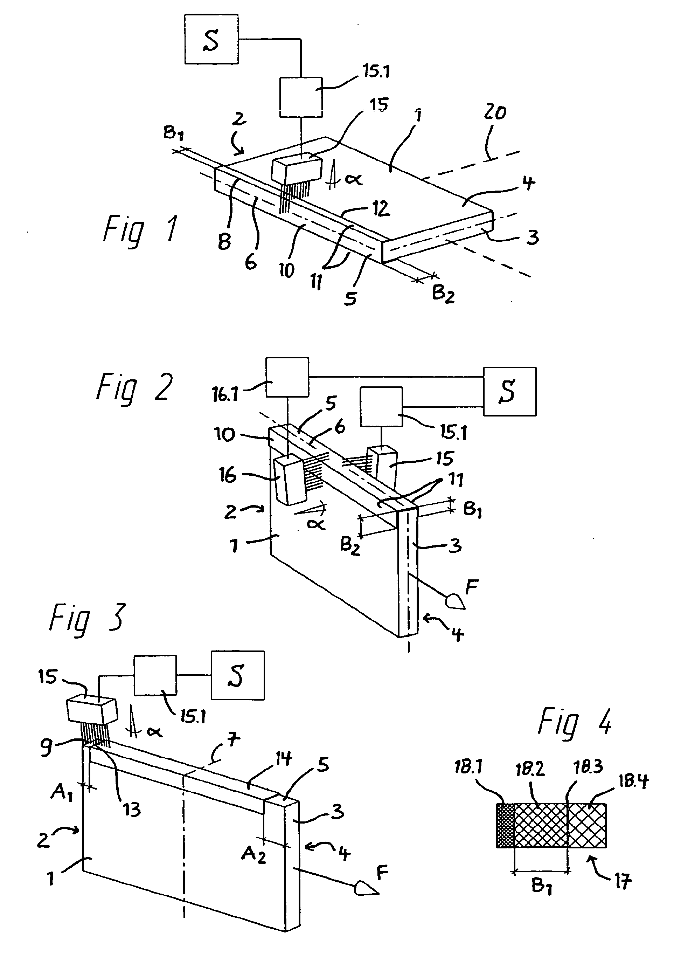

Der in Fig. 1 flach aufliegende Buchblock 1 weist einen Rücken 5, einen Kopf 2 und einen Fuß 3 sowie eine Vorderseite 4 auf. Sein Rücken 5 ist mit einem Fälzelstreifen 10 mit seitlichen Übergriffen 11 hinterklebt. Für eine lagerichtige Zuführung zu einer Buchstraße bzw. einer Bucheinhängemaschine, in welcher Buchblocks 1 in Buchdecken eingehangen werden, ist der Buchblock 1 erfindungsgemäß asymmetrisch zur Rückenlängsmitte 6 gefälzelt. Das heißt, die seitlichen Übergriffe 11 weisen unterschiedliche Übergriffbreiten B₁, B₂ auf, wobei die Differenz aus den Übergriffbreiten B₁, B₂ bei 3 bis 15 mm liegt.

Zur Abtastung einer Längskante 12 des Fälzelstreifens 10 ist ein licht- bzw. strahlungsempfindlicher Flächensensor 15 quer zu dieser Längskante 12 gegen die Vorderseite 4 des Buchblocks 1 gerichtet. Der Buchblock 1 kann bei der Abtastung still liegen oder in einer Querrichtung 20 oder Längsrichtung 21 von nicht weiter dargestellten Fördermitteln, z.B. einem Transportband, gefördert werden. Der Flächensensor 15 ist in einem Neigungswinkel α schräg auf den Buchblock 1 bzw. seiner Vorderseite 4 gerichtet, sodass von dem Flächensensor 15 eine dementsprechende Breite von einem Helligkeitsunterschied entlang der Längskante 12 abtastbar ist.

Der Flächensensor 15 weist eine integrierte Auswerteeinheit 15.1 auf, in der das Aufnahmebild 17 des Flächensensors 15 (siehe auch Fig. 4) dahingehend ausgewertet wird, ob erstens eine Kante des Fälzelstreifens 10 erkannt wurde und zweitens ihre relative Position am Buchblock 1 korrekt ist. Ein entsprechendes Signal wird an eine zugeordnete Steuerung S übergeben. Wird keine Kante des Fälzelstreifens 10 erkannt, so ist der Buchblock 1 derart verdreht angelegt, dass sich anstelle des Rückens 5 der Vorderschnitt befindet. Wird eine Kante vom Flächensensor 15 erfasst aber ihre relative Position am Buchblock 1 stimmt nicht, so ist der Buchblock 1 mit Kopf 2 und Fuß 3 vertauschter Lage angelegt worden. In beiden Fällen wird die Zuführung der Buchblocks 1 durch die Steuerung S unterbrochen.

Die relative Position der Längskante 12 am Buchblock 1 wird im Ausführungsbeispiel nach Fig. 1 dadurch ermittelt, dass der Flächensensor 15 nicht nur die Längskante 12 sondern auch eine Blockkante 8 abtastet. Das vom Flächensensor 15 erzeugte Aufnahmebild 17 (siehe Fig. 4) zeigt verschiedene Helligkeitsbereiche 18.1 bis 18.4. Der dunklere Helligkeitsbereich 18.3 bildet die Längskante 12 ab. Die Grenzlinie zwischen den Helligkeitsbereichen 18.1 und 18.2 stellt die Blockkante 8 dar. Der Abstand zwischen der Grenzlinie und dem Helligkeitsbereich 18.3 ist damit gleich der Breite B₁ des vom Flächensensor 15 abgetasteten Übergriffs 11 und kann von der Auswerteeinheit 15.1 durch Auswertung des Aufnahmebildes 17 ermittelt werden.

Die ermittelte Breite B₁ wird in der Auswerteeinheit 15.1 mit einem gespeicherten Referenzwert verglichen, welcher über die Steuerung S durch einen Teach-In-Vorgang mit einem ersten in korrekter Verarbeitungsposition angelegten Buchblock 1 festlegbar oder durch Vorgabe entsprechender Produktdaten in der Steuerung S bekannt ist. Die korrekte Verarbeitungsposition ist im Ausführungsbeispiel durch eine schmale Übergriffbreite B₁ definiert. Wird die breitere Übergriffbreite B₂ ermittelt, liegt eine Kopf 2 und Fuß 3 vertauschte Lage des Buchblocks 1 vor.

In einer alternativen Ausführungsform gemäß Fig. 2 wird der Buchblock 1 auf dem Vorderschnitt stehend von einer nicht weiter dargestellten Fördereinrichtung in Förderrichtung F transportiert und dabei von zwei Flächensensoren 15, 16 abgetastet. Der zweite Flächensensor 16 mit der integrierten Auswerteeinheit 16.1 ist auf der dem ersten Flächensensor 15 gegenüberliegenden Seite auf den Buchblock 1 gerichtet. Es werden also zwei Aufnahmebilder 17 ausgewertet. Die ermittelten Breiten B₁, B₂ der abgetasteten Übergriffe 11 werden in der Steuerung S miteinander verglichen. Bei korrekter Verarbeitungsposition muss die vom Flächensensor 15 abgetastete Breite B₁ kleiner sein als die Breite B₂ vom Flächensensor 16. Ein Vergleich mit einem gespeicherten Referenzwert ist hier also nicht erforderlich.

In Fig. 3 ist der Buchblock 1 mit einem in Rückenlängsrichtung asymmetrisch zur Rückenquermitte 7 angebrachten Fälzelstreifen 14 versehen, wobei der Fälzelstreifen 14 den Rücken 5 nicht vollständig abdeckt sondern in unterschiedlichen Abständen A₁, A₂ vom Kopf 2 bzw. Fuß 3 endet. Der Flächensensor 15 ist quer zu einer über den Rücken 5 verlaufenden Querkante 13 des Fälzelstreifens 14 gegen den Buchblock 1 gerichtet und erfasst vergleichbar mit dem Ausführungsbeispiel in Fig. 1 noch eine Blockkante 9 des Buchblocks 1, sodass in der Auswerteeinheit 15.1 ein Abstand A₁ ermitteln werden kann, welcher mit einem Referenzwert verglichen wird. Auch hier kann mit einem zweiten Flächensensor zusätzlich die gegenüberliegende Kante abgetastet werden, um im Vergleich der ermittelten Abstände A1, A2 auf die korrekte Verarbeitungsposition rückzuschließen.

Der Erfindungsgedanke, einen asymmetrisch angebrachten Fälzelstreifen 10, 14 zur eindeutigen Lageerkennung auszuwerten, ist in den Ausführungsbeispielen nach Fig. 1, 2 und 3 anhand einer Asymmetrie relativ zur Rückenlängsmitte 6 und einer Asymmetrie relativ zur Rückenquermitte 7 beschrieben. Andere Asymmetrien, wie einseitig abgeschrägte Ecken oder verzahnte Kanten, können selbstverständlich auch für eine Lageerkennung herangezogen werden.

Die in den Ausführungsbeispielen eingesetzten Flächensensoren 15, 16 eignen sich aufgrund ihrer zweidimensionalen Anordnung von Detektorelementen besonders, um die relativ schmale Kante 12 bzw. 13 des Fälzelstreifens 10 bzw. 14 sicher zu erkennen, insbesondere wenn der Fälzelstreifen 10 bzw. 14 und der Buchblock 1 von ähnlicher Farbe und Helligkeit sind. Selbstverständlich sind auch andere Sensoren, wie z.B. eindimensional aufgebaute Zeilensensoren, einsetzbar, wobei für eine sichere Abtastung ein Fälzelstreifenmaterial mit vom Buchblock 1 unterschiedlicher Farbe und/oder Helligkeitsintensität vorteilhaft ist.

In den Ausführungsbeispielen werden zur Erkennung der Block- und Fälzelkanten Helligkeitsunterschiede erfasst und ausgewertet. Es kann aber z.B. auch ein von einem entsprechenden Sensor aufgenommenes Höhenprofil zur Lageerkennung herangezogen werden.

## Patentansprüche

1. Verfahren zur Lageerkennung von im Rücken (5) mit einem Fälzelstreifen (10, 14) o. dgl. Vertärkungsstreifen hinterklebten Buchblocks (1), wobei eine Kante (12, 13) des Verstärhungstreifens (10, 14) mit einem Sensor (15, 16) abgetastet wird, **dadurch gekennzeichnet, dass** der Verstärhungstreifen (10, 14) asymmetrisch zur Blockrückenmitte (6, 7) angebracht ist.

2. Verfahren nach Anspruch 1, **dadurch gekennzeichnet, dass** der Verstärungsstreifen (10) mit unterschiedlichen, seitlichen Übergriffbreiten (B₁, B₂) am Rücken (5) angebracht wird und eine Längskante (12) des Verstärhungsstreifens (10) abgetastet wird.

3. Verfahren nach Anspruch 2, **dadurch gekennzeichnet, dass** die Differenz aus den unterschiedlichen, seitlichen Übergriffbreiten (B₁, B₂) 3 bis 15 mm beträgt.

4. Verfahren nach einem der Ansprüche 1 bis 3, **dadurch gekennzeichnet, dass** das Material des Verstähungsstreifens (10, 14) eine vom Buchblock (1) unterschiedliche Farbe und/oder Helligkeitsintensität aufweist.

5. Verfahren nach einem der Ansprüche 1 bis 4, **dadurch gekennzeichnet, dass** von dem Sensor (15, 16) zusätzlich eine Blockkante (8, 9) abgetastet wird.

6. Vorrichtung zur Lageerkennung von aufeinander folgend transportierten, im Rücken (5) mit einem Fälzelstreifen (10, 14) o. dgl. Verstärkungsstreifen mit ggf. seitlichen Übergriffen (11) hinterklebten Buchblocks (1), mit einer Fördervorrichtung (F) zum Transport der Buchblocks (1) und einem auf die Buchblocks (1) gerichteten, mit einer Steuerung (S) verbundenen Sensor (15, 16) wobei der-Sensor (15, 16) ein licht- bzw. strahlungsempfindlicher und eine wenigstens eindimensionale Anordnung aus Detektorelementen aufweisender Sensor (15, 16) ist, und wobei der Sensor (15, 16) zur Abtastung einer Kante (12, 13) des Verstärhungsstreifens (10, 14) im Wesentlichen quer zu dieser Kante (12, 13) gegen den Buchblock (1) gerichtet ist **dadurch gekennzeichnet, dass** zusätzlich zur Kante (12, 13) eine Blockkante (8, 9) abgetastet wird, wobei die Buchblocks (1) einen asymmetrisch zur Blockrückenmitte (6, 7) angebrachten Verstärhungsstreifen (10, 14) aufweisen.

7. Vorrichtung nach Anspruch 6, **dadurch gekennzeichnet, dass** der Sensor (15, 16) eine zweidimensionale Anordnung aus Detektorelementen aufweist.

8. Vorrichtung nach Anspruch 6 oder 7, **dadurch gekennzeichnet, dass** der Sensor (15, 16) in einem Neigungswinkel (α) schräg auf den Buchblock (1) gerichtet ist.

9. Vorrichtung nach einem der Ansprüche 6 bis 8, **dadurch gekennzeichnet, dass** der Sensor (15, 16) quer zum Rücken (5) wirkend gegen eine Flachseite (4) der Buchblocks (1) gerichtet ist, wobei die Buchblocks (1) einen mit unterschiedlichen, seitlichen Übergriffbreiten (B₁, B₂) angebrachten Verstärhungsstreifen (10) aufweisen.

10. Vorrichtung nach Anspruch 9, **dadurch gekennzeichnet, dass** die Differenz aus den unterschiedlichen, seitlichen Übergriffbreiten (B₁, B₂) 3 bis 15 mm beträgt.

11. Vorrichtung nach einem der Ansprüche 6 bis 10, **dadurch gekennzeichnet, dass** mit dem Sensor (15, 16) eine Lage der Kante (12, 13) des Verstärhungssreifens (10, 14) messbar ist.

12. Vorrichtung nach einem der Ansprüche 9 bis 11, **dadurch gekennzeichnet, dass** mit dem Sensor (15, 16) eine Breite (B₁, B₂) von einem seitlichen Übergriff (11) des Verstärhungsstreifens (10) am Buchblock (1) messbar ist.

13. Vorrichtung nach einem der Ansprüche 6 bis 12, **dadurch gekennzeichnet, dass** ein gemessener Wert (B1) des Sensors (15) mit einem gespeicherten Wert verglichen wird.

14. Vorrichtung nach einem der Ansprüche 6 bis 13, **dadurch gekennzeichnet, dass** ein weiterer Sensor (16) auf die gegenüberliegende Flachseite der Buchblocks (1) gerichtet ist und die gemessenen Werte (B₁, B₂) der beiden Sensoren (15, 16) miteinander verglichen werden.

## Claims

1. A method for determining the position of book blocks (1), the spine (5) of which is back-lined with a lining strip (10, 14) or similar reinforcing strip, wherein an edge (12, 13) of the reinforcing strip (10, 14) is scanned with a sensor (15, 16),
**characterized in that** the reinforcing strip (10, 14) is arranged asymmetric to the block spine center (6, 7).

2. The method according to Claim 1, **characterized in that** the reinforcing strip (10) is arranged on the spine (5) with different lateral overlapping widths (B₁, B₂) and a longitudinal edge (12) of the reinforcing strip (10) is scanned.

3. The method according to Claim 2, **characterized in that** the difference between the lateral overlapping widths (B₁, B₂) lies between 3 and 15 mm.

4. The method according to one of Claims 1 to 3, **characterized in that** the material of the reinforcing strip (10, 14) has a different color and/or luminous intensity than the book block (1).

5. The method according to one of Claims 1 to 4, **characterized in that** the sensor (15, 16) additionally scans a block edge (8, 9).

6. A device for determining the position of successively transported book blocks (1), the spine (5) of which is back-lined with a lining strip (10, 14) or similar reinforcing strip, if applicable, with lateral overlaps (11), with a feed device (F) for transporting the book blocks (1) and a sensor (15, 16) that is directed at the book blocks (1) and connected to a control (S), wherein the sensor (15, 16) consists of a light-sensitive or radiation-sensitive sensor (15, 16) and features an at least one-dimensional arrangement of detector elements, and wherein the sensor (15, 16) for scanning an edge (12, 13) of the reinforcing strip (10, 14) is essentially directed against the book block (1) transverse to this edge (12, 13),
**characterized in that** a block edge (8, 9) is scanned in addition to the edge (12, 13), wherein the book blocks (1) feature a reinforcing strip (10, 14) that is arranged asymmetric to the block spine center (6, 7).

7. The device according to Claim 6, **characterized in that** the sensor (15, 16) features a two-dimensional arrangement of detector elements.

8. The device according to Claim 6 or 7, **characterized in that** the sensor (15, 16) is obliquely directed at the book block (1) with an inclination angle (α).

9. The device according to one of Claims 6 to 8, **characterized in that** the sensor (15, 16) is directed against a flat side (4) of the book block (1) such that it acts transverse to the spine (5), wherein the book blocks (1) feature a reinforcing strip (10) that is arranged with different lateral overlapping widths (B₁, B₂).

10. The device according to Claim 9, **characterized in that** the difference between the lateral overlapping widths (B₁, B₂) lies between 3 and 15 mm.

11. The device according to one of Claims 6 to 10, **characterized in that** the position of the edge (12, 13) of the reinforcing strip (10, 14) can be measured by means of the sensor (15, 16).

12. The device according to one of Claims 9 to 11, **characterized in that** the width (B₁, B₂) of a lateral overlap (11) of the reinforcing strip (10) on the book block (1) can be measured by means of the sensor (15, 16).

13. The device according to one of Claims 6 to 12, **characterized in that** a measured value (B1) of the sensor (15) is compared with a stored value.

14. The device according to one of Claims 6 to 13, **characterized in that** another sensor (16) is directed at the opposite flat side of the book block (1) and the measured values (B₁, B₂) of the two sensors (15, 16) are compared with one another.

## Revendications

1. Procédé de reconnaissance de position de blocs de livres (1) surcollés dans le dos (5) par un onglet (10, 14) ou une bande de renfort similaire, lors duquel on balaye une arête (12, 13) de la bande de renfort (10, 14) avec un capteur (15, 16), **caractérisé en ce que** la bande de renfort (10, 14) est montée de manière asymétrique par rapport au centre du dos de bloc.

2. Procédé selon la revendication 1, **caractérisé en ce qu'**on monte la bande de renfort 10) sur le dos (5) avec différentes largeurs de recouvrement (B₁, B₂) latérales et **en ce qu'**on balaye une arête longitudinale (12) de la bande de renfort (10).

3. Procédé selon la revendication 2, **caractérisé en ce que** la différence entre les différentes largeurs de recouvrement (B₁, B₂) latérales est de 3 à 15 mm.

4. Procédé selon l'une quelconque des revendications 1 à 3, **caractérisé en ce que** la matière de la bande de renfort 10, 14) présente une couleur et/ou une intensité lumineuse différente de celle(s) du bloc de livre (1).

5. Procédé selon l'une quelconque des revendications 1 à 4, **caractérisé en ce que** le capteur (15, 16) balaye en supplément une arête du bloc (8, 9).

6. Dispositif de reconnaissance de position de blocs de livres (1) transportés successivement, surcollés dans le dos (5) par un onglet (10, 14) ou une bande de renfort similaire avec le cas échéant des recouvrements (11) latéraux, avec un dispositif de convoyage (F) pour le transport des blocs de livres (1) et un capteur (15, 16) dirigé sur les blocs de livres (1), relié à un système de commande (S), le capteur (15, 16) étant un capteur (15, 16) photosensible ou radiosensible et comportant un agencement à au moins une dimension d'éléments détecteurs et pour balayer une arête (12, 13) de la bande de renfort (10, 14), le capteur (15, 16) étant dirigé sensiblement à la transversale de ladite arête (12, 13) contre le bloc de livre (1), **caractérisé en ce qu'**en supplément de l'arête (12, 13), on balaye une arête de bloc (8, 9), les blocs de livres (1) comportant une bande de renfort (10, 14) montée de manière asymétrique par rapport au centre du dos de livre (6, 7).

7. Dispositif selon la revendication 6, **caractérisé en ce que** le capteur (15, 16) comporte un agencement bidimensionnel d'éléments détecteurs.

8. Dispositif selon la revendication 6 ou la revendication 7, **caractérisé en ce que** le capteur (15, 16) est dirigé sous un angle d'inclinaison (α) en oblique vers le bloc de livre (1).

9. Dispositif selon l'une quelconque des revendications 6 à 8, **caractérisé en ce que** le capteur (15, 16) est dirigé contre un côté plat (4) des blocs de livres (1), en agissant à la transversale du dos (5), les blocs de livres (1) comportant une bande de renfort (10) montée avec différentes largeurs de recouvrement (B₁, B₂) latérales.

10. Dispositif selon la revendication 9, **caractérisé en ce que** la différence entre les différentes largeurs de recouvrement (B₁, B₂) latérales est de 3 à 15 mm.

11. Dispositif selon l'une quelconque des revendications 6 à 10, **caractérisé en ce qu'**une position de l'arête (12, 13) de la bande de renfort (10, 14) peut être mesurée avec le capteur (15, 16).

12. Dispositif selon l'une quelconque des revendications 9 à 11, **caractérisé en ce qu'**avec le capteur (15, 16), on peut mesurer une largeur (B₁, B₂) d'un recouvrement latéral (11) de la bande de renfort (10) sur le bloc de livre (1).

13. Dispositif selon l'une quelconque des revendications 6 à 12, **caractérisé en ce qu'**on compare une valeur mesurée (B1) par le capteur (15) avec une valeur mémorisée.

14. Dispositif selon l'une quelconque des revendications 6 à 13, **caractérisé en ce qu'**un capteur supplémentaire (16) est dirigé vers le côté plat opposé des blocs de livres (1) et on compare entre elles les valeurs mesurées (B₁, B₂) par les deux capteurs (15, 16).
